# EUROPEAN PATENT APPLICATION

(11) **EP 2 618 081 A2**
(43) Date of publication of application: **24.07.2013**
(21) Application number: 13382003.5
(22) Date of filing: 09.01.2013
(51) Int. Cl.: F25D 17/04

(54) **Pressure equalizing valve for a cooling appliance and cooling appliance incorporating said valve**

(30) Priority: 17.01.2012 ES 201230062
(71) Applicant: Fagor, S. Coop., 20500 Arrasate-Mondragon (ES)
(72) Inventor: Valor Valor, Antonio, 20500 Arrasate-Mondragon (ES); Herrarte Letona, Igor, 20500 Arrasate-Mondragon (ES); Barbara Ganzabal, Joseba, 01400 Laudio (ES)
(74) Representative: Igartua, Ismael

(57) **Abstract**

The present invention relates to a pressure equalizing valve for a cooling appliance comprising a conduit (3) suitable for being assembled traversing a wall (4) separating two areas (5,6) the pressures of which are to be equalized, closure means (7) assembled inside the conduit (3) in a closure seat (8), closing the air passage in a closed position and being movable towards an open position when a pressure difference occurs between the two areas (5,6), and a heat transmitter (9) in thermal contact with said conduit (3), wherein said valve (1) is suitable for arranging the conduit (3) in a vertical position, the closure seat (8) being arranged in the lower part (10) of the conduit (3), and the heat transmitter (9) being prolonged to the lower area (5). The present invention also relates to a cooling appliance incorporating the pressure equalizing valve.

## Description

### TECHNICAL FIELD

The present invention relates to pressure equalizing valves for cooling appliances, particularly for refrigerators and freezers, and to cooling appliances incorporating said valves.

### PRIOR ART

Cooling appliances, particularly domestic refrigerators and freezers, which are provided with at least one closed and thermally insulated freezing enclosure, the interior temperature of which is much lower than the ambient temperature, are known. This temperature difference translates into a pressure difference, the freezing enclosure having a lower pressure than the outside, and causes difficulties when opening the door of the cooling appliance.

To solve this problem, pressure equalizing valves, the function of which is to equalize the pressure between two areas, are known in the prior art. One type of these valves are those comprising a conduit suitable for being assembled traversing a wall separating two areas, the pressures of which are to be equalized. The valve comprises closure means inside the conduit which is assembled in a closure seat closing the air passage in a closed position, and being movable towards an open position when a pressure difference occurs between the two areas, allowing the passage of air until reaching pressure balance.

Patent US6672096 B2 describes a valve for cooling appliances comprising the features described above, in which the conduit is arranged horizontally traversing a wall and is made of a thermally conductive material. Said conduit comprises an L-shaped front portion at one end located in an area outside the cooling appliance, said front portion allowing arranging the closure means and the closure seat in a vertical position. The valve also comprises a heat transmitter assembled in thermal contact with the conduit in the outer area, said heat transmitter allowing capturing heat from an external heat source. Therefore, the heat captured with the heat transmitter is transmitted to the conduit, and since this conduit is thermally conductive it allows the heat to reach the end of the conduit in the inner area of the cooling appliance.

### DISCLOSURE OF THE INVENTION

The object of the invention is to provide a pressure equalizing valve for a cooling appliance and a cooling appliance comprising the pressure equalizing valve as defined in the claims.

The pressure equalizing valve for a cooling appliance of the invention, particularly a home refrigerator and freezer, comprises a conduit suitable for being assembled traversing a wall separating two areas, the pressures of which are to be equalized, a closure means assembled inside the conduit in a closure seat closing the air passage in a closed position, and being movable towards an open position when a pressure difference occurs between the two areas, and a heat transmitter in thermal contact with said conduit. The valve is suitable for arranging the conduit in a vertical position, the closure seat being arranged in the lower part of the conduit, and the heat transmitter being prolonged to the lower area.

Since the valve of the invention has part of the heat transmitter arranged in the lower area, it allows capturing heat and transmitting it with a single piece, thus reducing costs due to simplicity. Furthermore, since the valve is in a vertical position, its structure is simpler, and both the valve manufacturing process and the process of assembling it in the cooling appliance, as well as the process of cleaning it through the access thereof, are simpler, which translates into lower costs.

These and other advantages and features of the invention will become evident in view of the drawings and the detailed description of the invention.

### DESCRIPTION OF THE DRAWINGS

Figure 1 shows a side elevational view of an embodiment of the pressure equalizing valve of the invention.
Figure 2 shows a front elevational partial longitudinal section view of the valve of Figure 1 assembled in a cooling appliance.
Figure 3 shows an A-A cross-section view of the valve of Figure 1.
Figure 4 shows a B-B cross-section view of the valve of Figure 1.
The Figure 5 shows a C-C cross-section view of the valve of Figure 1.
Figure 6 shows a side elevational longitudinal section view of a cooling appliance with the valve of Figure 1 assembled in said appliance.

### DETAILED DISCLOSURE OF THE INVENTION

The pressure equalizing valve for a cooling appliance 2 of the invention regulates the entrance of outside air into a enclosure of said appliance 2, when the pressure therein is much lower than the pressure outside.

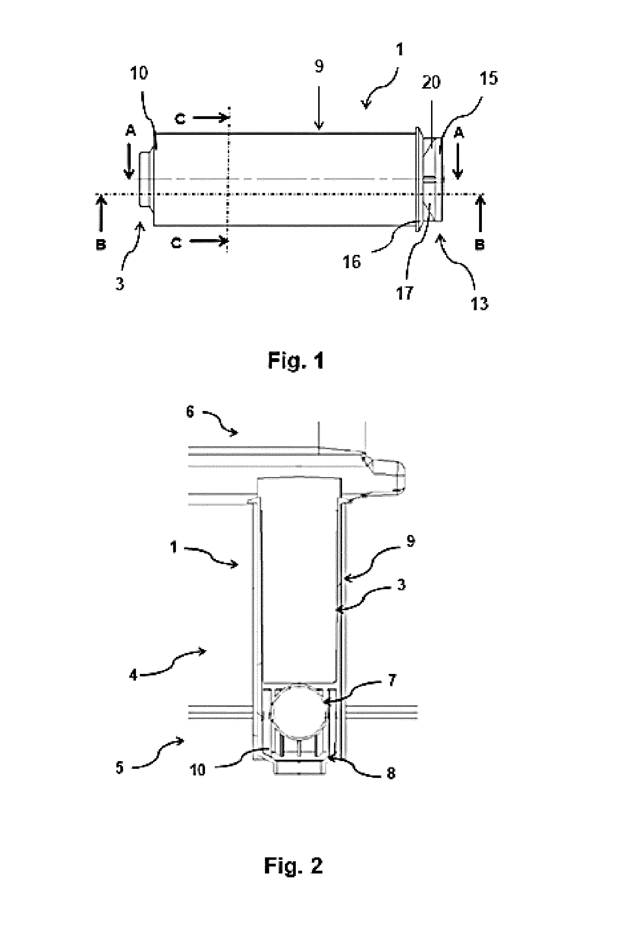

Figure 1 shows a side elevational view of an embodiment of the valve of the invention, and Figure 2 shows a front elevational partial longitudinal cross-section view of the valve of Figure 1 assembled in a cooling appliance. As can be seen in the drawings, valve 1 comprises a conduit 3, which in this embodiment is cylindrical shaped with two open ends, and which is suitable for being assembled traversing a wall 4 separating two areas 5 and 6, the pressures of which are different and are to be equalized. Inside said conduit 3 the valve 1 comprises a closure means 7 which is assembled in a closure seat 8; this closure seat 8 is formed by reducing the diameter of the conduit 3 forming a flange in which the closure means 7 sits. In a normal situation of pressure equalizing, said closure means 7 is seated in the closure seat 8 in a closed position closing the air passage, and when a pressure difference occurs between the two areas 5 and 6, such means moves towards an open position, shown in Figure 2, allowing the passage of air. Outside the valve 1, and in thermal contact with the conduit 3, there is arranged a heat transmitter 9, the main function of which is to capture heat from the external environment and transmit it along the entire length of the conduit 3.

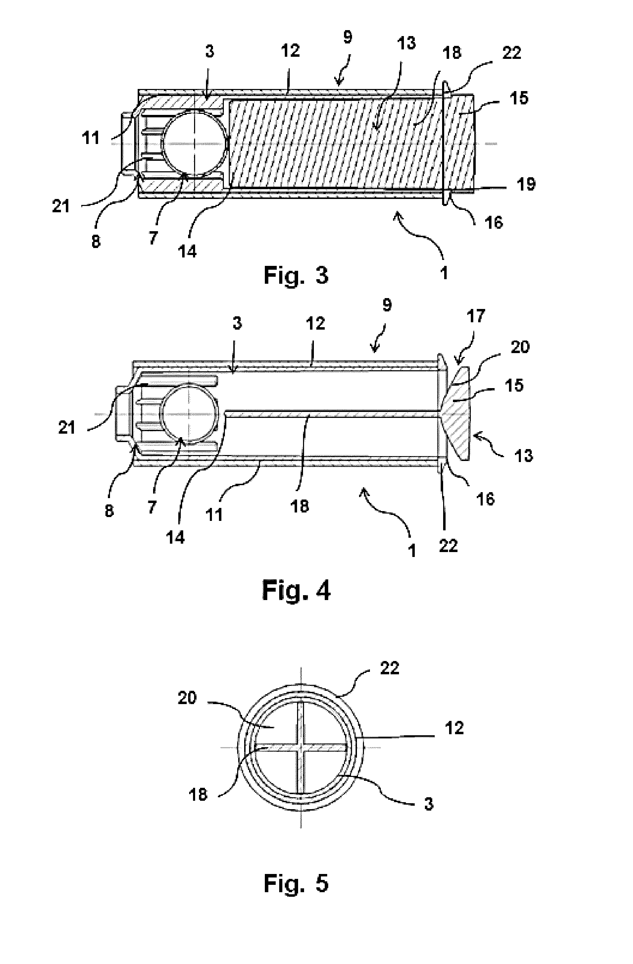

The valve 1 of the invention is suitable for arranging the conduit 3 in a vertical position, the closure seat 8 being therefore arranged in the lower part 10 of the conduit 3 with the closure means 7 seated in said seat 8 in the closed position, and the heat transmitter 9 prolongs along the conduit 3, traversing the wall 4 until projecting in the lower area 5. As can be seen with more detail in Figure 3, showing an A-A cross-section view of the valve 1 of Figure 1, in this embodiment the heat transmitter 9 is a cylindrical shaped metal sleeve 12 inside which the also cylindrical conduit 3 is housed, good contact with the outer surface 11 of the conduit 3 being obtained; in this embodiment the metal sleeve 12 is made of aluminum having a very good thermal conductivity, therefore a uniform and fluid transmission of heat captured by the heat transmitter 9 in the lower area 5 being obtained.

The valve 1 with the features defined above is seen in Figure 3 and also in Figures 4 and 5 showing a B-B cross-section view and a C-C cross-section view of the valve 1 of Figure 1. Said valve 1 also comprises a plug 13 which is introduced in the conduit 3, said plug 13 being necessary in such valves, with an open conduit at its two ends and arranged in a vertical position, since without the plug, the valve 1 is susceptible to collecting impurities which are in the surrounding environment; said impurities can cause the closure means 7 to sit poorly in the closure seat 8, or even cause a blockage of the closure means 7 inside the conduit 3, any of said situations causing a poor closure and therefore a continuous passage of air and a poor operation of the valve 1. Said plug 13 comprises a lower end 14 abutting with the closure means 7 in the movement thereof from the closed position to the open position, and it also comprises a cap 15 resting on one end 16 of the conduit 3; this end 16 of the conduit 3 is in the upper area 6, and therefore outside the wall 4, there being a space 17 between the cap 15 and said end 16 allowing the passage of air between the two areas 5 and 6. With this plug 13 configuration, impurities cannot enter the conduit 3 due to the cap 15, while at the same time the air can circulate when a pressure difference occurs between the two areas 5 and 6.

In order for the air to circulate inside the conduit 3 towards the exit space 17, the plug 13 comprises a plurality of ribs 18, in this embodiment there are four ribs, prolonging from the cap 15 to the lower end 14 of said plug 13, the central body of the plug 13 therefore being formed by the ribs 18 which are configured as radial fins emerging from the central longitudinal axis of plug 13, and therefore allowing passage of air. Plug 13 also comprises flanges 19 at the end of each rib 18 and below the cap 15, said flanges 19 allowing the cap 15 to rest on the end 16 of the conduit 3, and therefore successfully creating the space 17 through where the air can exit. For the air circulating through the inside of the conduit 3 to exit through space 17 without causing a head-on collision with the cap 15, and therefore resulting in a significant head loss, the plug 13 comprises ramps 20 arranged below the cap 15 and between the ribs 18, with an angle which allows the exit of air through the space 17 with a minimized head loss; this translates into the fact that the surrounding air which is usually moisture laden air, does not leave water in the form of droplets inside the conduit 3 and at its end 16, when a water loss occurs as the air collides head-on with the cap 15 of the plug 13. In any configuration of a pressure equalizing valve of this type, which aims to equalize the pressure between two areas with different pressure, one requirement to be met for the correct operation of said valve is that the smaller air passage area through the inside of the conduit, in the depicted embodiment, the area existing between the closure means 7 and the free inner surface of the conduit 3, must be larger than the outer entrance area of the valve, in said embodiment the area existing in the entrance of the conduit 3 in its lower part 10; likewise the smaller exit area of the valve, in the embodiment the area depicted by space 17, must be larger than the outer entrance area of the valve, the valve 1 of the invention meeting both requirements. In this embodiment of the valve 1 of the invention, the plug 13 is made of plastic, preferably a thermostable plastic, conferring it with stability and rigidity characteristics when it is subjected to high temperatures.

The closure means 7 is a floating means, a sphere in the embodiment depicted in the drawings, which sits in the closure seat 8 by gravity in a closed position in the lower part 10 of the conduit 3, when there is pressure balance between the lower area 5 and the upper area 6. When a pressure difference occurs between both areas 5 and 6, the pressure of the lower area 5 which is higher than the pressure of the upper area 6, means that the closure means 7 is impelled from the closed position, floating and being moved towards the open position, and therefore allowing the passage of air. This passage of air which allows equalizing pressures between both areas 5 and 6, can however cause vortices in the lower part 10 of the conduit 3, and it can even accordingly produce disturbing noises; to prevent said phenomenon, the conduit 3 internally comprises in the lower part 10 a plurality of ribs 21 projecting radially from the inner surface of the conduit 3, and they are arranged longitudinally between the closure seat 8 and the lower end 14 of the plug 13. Said ribs 21 project enough so that the closure means 7 is guided by said ribs 21 from the closed position to the open position, and vortices and subsequent noises are therefore prevented.

The conduit 3 comprises at the end 16 an edge 22, which in this embodiment is circular, which allows supporting the conduit 3 against the wall 4, and therefore fitting the valve 1 in its vertical position in the orifice traversed by said wall 4, thus preventing any passage of air or of impurities between the two areas 5 and 6. In this embodiment of the valve 1 of the invention, the conduit 3 and the closure means 7 are made of plastic, preferably a thermostable plastic conferring them with stability and rigidity characteristics when they are subjected to high temperatures.

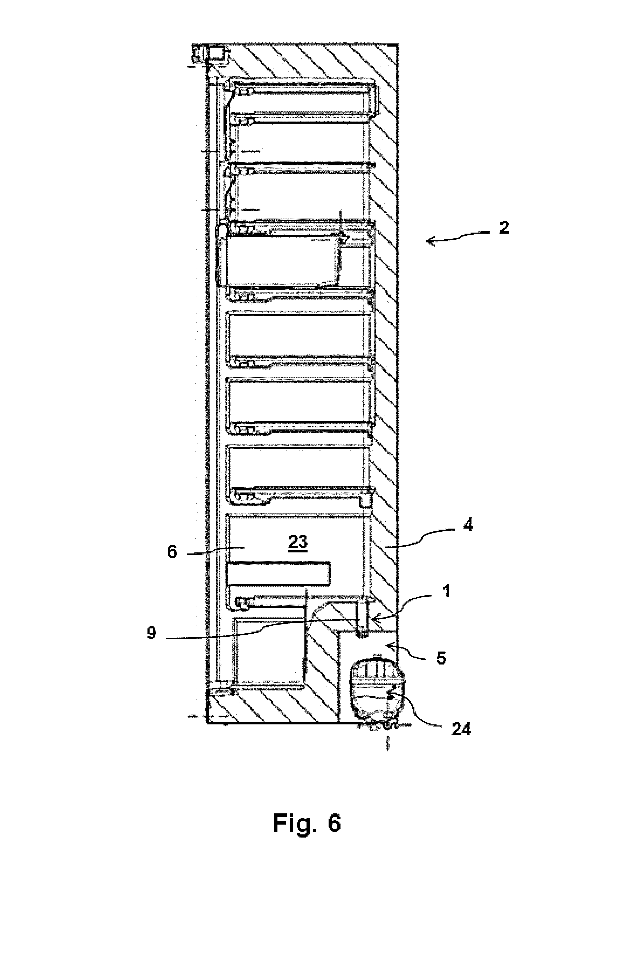

Figure 6 shows a side elevational longitudinal section view of a cooling appliance 2 with the valve 1 of the invention assembled in said appliance 2. In this embodiment, the cooling appliance 2 comprises a freezing enclosure 23 surrounded by wall 4 enveloping the freezing enclosure 23 and thermally insulating it; the wall 4 separates two areas 5 and 6 which are the outside of the cooling appliance 2 and the inside of the freezing enclosure 23, respectively. In this embodiment, the valve 1 is located in a horizontal area of the wall 4 enveloping the freezing enclosure 23, such that its location is vertical upon traversing said wall 4; this area of the wall 4 is arranged close to and above a heat source 24, such that the valve 1 is located above said heat source 24, and since heat tends to rise, it will contact the valve 1. The heat transmitter 9 of the valve 1 is arranged such that it prolongs from the upper end 16 of the conduit 3, which is inside the freezing enclosure 23, traversing the orifice of the wall 4, and projecting into the outer area 5 which is facing and above the heat source 24; this heat transmitter 9 captures the heat emitted by said heat source and, being that it is a metal sleeve 12, preferably made of aluminum and therefore having very good thermal conductivity, and being that it is in contact with the outer contour 11 of the conduit 3, it can transmit said heat to the end 16 of the conduit 3 of the valve 1. In the embodiment shown in Figure 6, the heat source 24 is the compressor of the cooling appliance 2, said compressor being a component of the cooling circuit of the appliance 2 which periodically starts up and, due to its operation, generates and becomes a heat source.

Therefore, a solution is provided to the problem of equalizing pressures, which problem increases considerably in the cooling appliance 2 moments after closing the freezing enclosure 23 following the opening thereof, due to the fact that in those moments the pressure of the air inside the freezing enclosure 23 drops due to the low temperature, and the pressure is not usually equalized by natural means with respect to the outside pressure, until some time has elapsed since the last opening, which translates into a real problem for the user. In addition to this advantage of the valve 1 of the invention, a solution is also provided to the problem where the end of the valve 1, which is inside the freezing enclosure 23, freezes; due to the low temperatures of said enclosure 23, and to the fact that the air which is introduced through said valve 1 into the enclosure 23 from the outside contains moisture, layers of ice tend to form at said end which end up blocking the valve, preventing the valve from performing its pressure equalizing function. With the heat capture and transmission performed by the heat transmitter 9, said heat reaches the end 16 of the conduit 3 of the valve 1, and prevents ice from forming in said area, and therefore the valve 1 continues to perform its function; the configuration of the cap 15 of the plug 13 having ramps 20, allowing the air that has circulated through the inside of the conduit 3 to exit through space 17 existing between the cap 15 and the conduit 3, also aids to solve said problem, minimizing the collision and therefore the head loss in said area, which translates into the fact that the air leaves part of its moisture in the form of water droplets.

Other advantages which have been described in the description are, for example, the existence of the plug 13 preventing the entrance of impurities from the freezing enclosure 23 into the conduit 3, and therefore preventing its blockage; another advantage is the arrangement of the ribs 21 in the lower part 10 inside the conduit 3, which allows the closure means 7 to move better in the movement from the closed position to the open position, translating into the disappearance of vortices inside the conduit 3 and the absence of noises.

The heat transmitter 9 is arranged in the valve 1 of the invention surrounding the conduit 3 in a single piece, to enable constructing said conduit 3 from a material such as a cheaper and easier to make plastic, and thus reducing the costs due to simplicity. Furthermore, since the valve 1 is in a vertical position and is made of components configured in single parts, its structure is simpler, and therefore the process of manufacturing the valve 1, the process of assembling it in any wall 4, as well as a more efficient process of cleaning it due to the existence of plug 13, and because the access from the area 6 is simple, translates into lower costs.

## Claims

1. A pressure equalizing valve for a cooling appliance (2), comprising a conduit (3) suitable for being assembled traversing a wall (4) separating two areas (5, 6) the pressures of which are to be equalized, closure means (7) assembled inside the conduit (3) in a closure seat (8), closing the air passage in a closed position, and being movable towards an open position when a pressure difference occurs between the two areas (5 ,6), and a heat transmitter (9) in thermal contact with said conduit (3), **characterized in that** it is suitable for arranging the conduit (3) in a vertical position, the closure seat (8) being arranged in the lower part (10) of the conduit (3) and the heat transmitter (9) being prolonged to the lower area (5).

2. The valve according to claim 1, wherein the heat transmitter (9) is a substantially cylindrical body in contact with at least part of the outer contour (11) of the conduit (3).

3. The valve according to claim 2, wherein the heat transmitter (9) is a metal sleeve (12) in which the conduit (3) is housed.

4. The valve according to claim 3, wherein the metal sleeve (12) is made of aluminum.

5. The valve according to any of the preceding claims, comprising a plug (13) introduced in the conduit (3), said plug (13) comprising a lower end (14) abutting with the closure means (7) in the movement thereof, and a cap (15) resting on one end (16) of the conduit (3) arranged in the upper area (6), there being a space (17) between the cap (15) and the end (16) of the conduit (3) allowing the passage of air between the two areas (5,6), and the cap (15) of the plug (13) preventing impurities from entering the conduit (3).

6. The valve according to claim 5, wherein the plug (13) comprises a plurality of ribs (18) prolonging from the cap (15) to the lower end (14) of the plug (13), said ribs (18) allowing the passage of air.

7. The valve according to claim 6, wherein the plug (13) comprises flanges (19) at the end of each rib (18) and below the cap (15), which allows resting the cap (15) on the end (16) of the conduit (3), and comprises ramps (20) below the cap (15) and between the ribs (18), which allow the exit of air minimizing the amount of water in said valve (1).

8. The valve according to any of claims 5 to 7, wherein the plug (13) is made of plastic, preferably a thermostable plastic.

9. The valve according to any of the preceding claims, wherein the closure means (7) is a floating means, preferably a sphere, located by gravity in the closed position.

10. The valve according to any of claims 5 to 9, wherein the conduit (3) internally comprises in the lower part (10) a plurality of ribs (21) arranged between the closure seat (8) and the lower end (14) of the plug (13).

11. The valve according to any of claims 5 to 10, wherein the conduit (3) comprises at the end (16) an edge (22) which allows supporting the conduit (3) against the wall (4).

12. The valve according to any of the preceding claims, wherein the conduit (3) and the closure means (7) are made of plastic, preferably a thermostable plastic.

13. A cooling appliance **characterized in that** it comprises a pressure equalizing valve (1) according to any of the preceding claims.

14. The cooling appliance according to the preceding claim, comprising a freezing enclosure (23) surrounded by the wall (4), and an external heat source (24) located next to the enclosure (23), the valve (1) being located above the external heat source (24), and the heat transmitter (9) capturing the heat of said external heat source (24).

15. The cooling appliance according to the preceding claim, wherein the external heat source (24) is a compressor.
